# EUROPÄISCHE PATENTSCHRIFT

(11) **EP 0 596 287 B1**
(45) Veröffentlichungstag und Bekanntmachung des Hinweises auf die Patenterteilung: **12.06.1996**
(21) Anmeldenummer: 93116592.2
(22) Anmeldetag: 14.10.1993
(51) Int. Cl.: F16D 3/60

(54) **Gelenkkupplung**
Joint coupling
Accouplement articulé

(30) Priorität: 05.11.1992 DE 4237327
(43) Veröffentlichungstag der Anmeldung: 11.05.1994
(73) Patentinhaber: Hackforth GmbH & Co. KG, D-44653 Herne (DE)
(72) Erfinder: Birioukov, Ivan Watscheslawowitsch, Prof. Dr.-Ing., Moskau 127 322 (RU); Usmanov, Hasan Gumerowitsch, Prof. Dr.-Ing., Moskau 7 (RU)
(74) Vertreter: Finkener und Ernesti Patentanwälte

(56) Entgegenhaltungen:
- EP-A- 0 034 440
- BE-A- 568 272
- FR-A- 2 292 160

## Beschreibung

Die Erfindung betrifft eine Gelenkkupplung, insbesondere für Schienenfahrzeuge, zum Kuppeln umlaufender Teile, die gegeneinander begrenzt radial und/oder winklig beweglich sind, gemäß dem Oberbegriff des Anspruchs 1.

Gelenkkupplungen dieser Art sind in unterschiedlichen Ausführungen bekannt, z. B. durch die DE-A-30 49 054. Bei diesen Kupplungen ist ein erster Flansch auf der antreibenden Seite über ein erstes und ein zweites Paar Lenker mit einem zweiten Flansch auf der angetriebenen Seite verbunden. Dabei ist ein Zwischenglied als Stütze vorgesehen, welches mit einer Öffnung die Antriebswelle mit Spiel umschließt und die Lenker der beiden Paare gelenkig miteinander verbindet.

Die hauptsächlichen Faktoren, die die Lebensdauer solcher Kupplungen bestimmen, sind winklige Verlagerungen der Kupplungselemente zueinander, kinematische Fehler, d. h. die Änderung des Übertragungskoeffizienten während einer Umdrehung, der die Rolle des Erregers von erzwungenen Schwingungen des Antriebssystems bildet, und Unwuchten der Kupplung. Bei den zu erwartenden Betriebsbedingungen sollten die Winkelverlagerungen der Lenker und die auftretenden Unwuchtkräfte möglichst gering sein, während andererseits eine ausreichende radiale Verlagerungsfähigkeit gewährleistet sein sollte.

Die Aufgabe der Erfindung besteht demnach darin, eine verbesserte Gelenkkupplung bereit zu stellen, die auf den Vorteilen der bekannten Gelenkkupplungen beruht, bei der aber gleichzeitig die Nachteile nicht oder nur verringert auftreten, um so eine höhere Lebensdauer im Betrieb bei den zu erwartenden Verlagerungen zu erzielen.

Ausgehend von einer Gelenkkupplung der eingangs beschriebenen Art wird diese Aufgabe erfindungsgemäß dadurch gelöst, daß
a) die beiden Flansche fluchtend angeordnet sind,
b) alle Lenker die gleiche wirksame Länge haben,
c) die Lenker eines Paares an ihren inneren Enden drehgelenkig miteinander verbunden sind,
d) die Projektionen der Gelenkpunkte der beiden Paare von Lenkern in einer zur Treibachse quer stehenden Ebene die Eckpunkte eines Quadrats bilden,
e) die Abstützung am Zwischenglied an zwei einander gegenüberstehenden Lenkern jeweils in ihrer Mitte vorgesehen ist und
f) die Halbarme der am Zwischenglied angelenkten Lenker auf axial entgegengesetzten Seiten bzw. der Längsmittenebene des Zwischengliedes verlaufen.

Vorteilhafte weitere Ausgestaltungen der Erfindung sind in den Unteransprüchen beschrieben.

So sind nach einer ersten vorteilhaften Weiterbildung die am Zwischenglied angelenkten Lenker in Richtung zur Treibachse derart stumpfwinklig abgeknickt ausgebildet, daß die beiden Gelenkachsen des Zwischengliedes auf einer Kreislinie liegen, die durch die Ecken des vorerwähnten Quadrates verläuft.

Zur Halterung der Lenker an den Flanschen sind an diesen zur Treibachse parallele Gelenkzapfen starr befestigt, an denen die Lenker unter Verwendung von an sich bekannten Gummi-Metall-Gelenken gehalten sind.

Nach einer ersten Lösungsform bestehen die am Zwischenglied angelenkten Lenker aus je zwei Hälften, die durch einen Lagerbolzen starr miteinander verbunden sind, der gleichzeitig der gelenkigen Lagerung dient.

Die Lagerbolzen werden vorteilhafterweise je mit Hilfe eines sphärisch ausgebildeten Gummi-Metall-Gelenks am Zwischenglied gelagert.

Nach einer anderen Lösungsform sind die am Zwischenglied angelenkten Lenker je als einteilige Lenker mit einer angeformten Lagerbuchse ausgebildet, wobei das Zwischenglied an seinen Enden je eine Gabel zur Aufnahme je einer Lagerbuchse aufweist, die in der Gabel an einem Gabelzapfen gelagert ist.

Die Lagerbuchsen werden vorteilhafterweise je mit Hilfe eines Gummi-Metall-Gelenks am Gabelzapfen gelagert.

Bei der neuen Gelenkkupplung sind zur Erzielung größtmöglicher Zentralsymmetrie die Mittelpunkte aller Gelenke auf einem einzigen Kreisbogen angeordnet.

Weiter sind alle Lenker gleich lang. Die am Zwischenglied angelenkten Lenker sind dabei so gestaltet, daß sie sich auf entgegengesetzten Seiten des Zwischengliedes bzw. seiner Mittenebene befinden. Dadurch ist eine äußerst kompakte Bauweise erzielbar. Für alle Gelenke können an sich bekannte Gummi-Metall-Gelenke eingesetzt werden, so daß die Gelenke begrenzt elastisch sind. Dank dieser Ausgestaltung sind bei der neuen Gelenkkupplung optimale kinematische und dynamische Bedingungen für die gelenkigen Elemente erzielbar, die die Lebensdauer der Kuppplung und die Zuverlässigkeit der gesamten Anordnung bestimmen.

Nachfolgend wird die Erfindung anhand der Zeichnung, in der zwei Ausführungsbeispiele von Gelenkkupplungen gemäß der Erfindung schematisch dargestellt sind, näher erläutert. Es zeigt:
- Fig. 1: eine perspektivische Ansicht der Gelenkkupplung, bei der verschiedene Einzelteile auseinandergezogen dargestellt sind,
- Fig. 2: eine Seitenansicht der Gelenkkupplung nach Fig. 1 mit Details im Schnitt,
- Fig. 3: eine weitere perspektivische Ansicht einer Gelenkkupplung in einer abgewandelten Ausführungsform,
- Fig. 4: eine Seitenansicht der Ausführungsform nach Fig. 3 mit Details im Schnitt und
- Fig. 5: ein Schema der Gelenkkupplung mit der Darstellung der Gelenkpunkte auf einer einzigen Kreislinie.

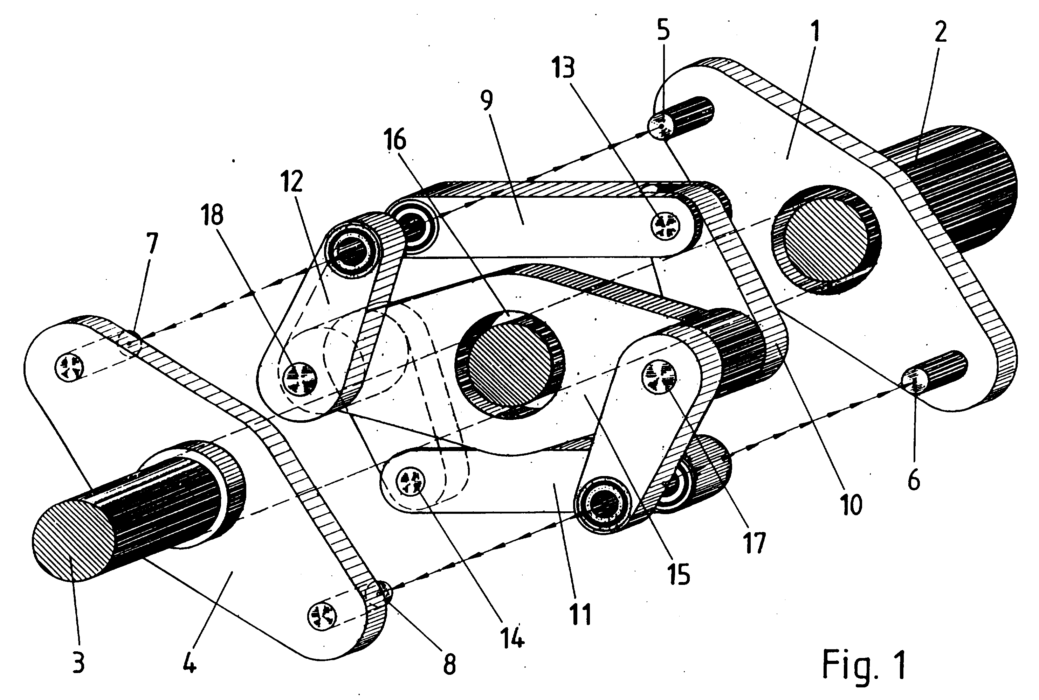

In Fig. 1 ist der antriebsseitige Flansch (1) der Gelenkkupplung drehfest mit einer Hohlwelle (2) verbunden, die im nicht dargestellten Fahrzeugrahmen gelagert ist und die mit dem Antriebsmotor in Verbindung steht. Im Innern der antreibenden Hohlwelle (2) erstreckt sich die Treibachse (3), mit der der angetriebene Flansch (4) in drehfester Verbindung steht. Die Treibachse (3) ist gegenüber der antreibenden Hohlwelle (2) radial- und/oder winkelbeweglich. Bei dem dargestellten Ausführungsbeispiel haben die miteinander fluchtenden Flansche (1, 4) eine rhomboide Umrißform. Sie können ebensogut anders geformt sein, beispielsweise kreisrund.

An den freien Enden der Flansche (1, 4) sitzen auf den Innenseiten paarweise fluchtende Gelenkzapfen (5, 6 bzw. 7, 8). Die Gelenkzapfen (5, 8) sind durch ein erstes Paar Lenker, gebildet aus den Lenkern (9, 10), und die Gelenkzapfen (6, 7) durch ein zweites Paar Lenker, gebildet aus den Lenkern (11, 12), miteinander verbunden. Dabei sind die auf den Gelenkzapfen sitzenden Gelenke als Gummi-Metall-Gelenke ausgebildet. Sie bestehen im wesentlichen aus zwei konzentrischen Hülsen und einem Gummiring im Zwischenraum zwischen den beiden Hülsen, der an den Wandungen der Hülsen anvulkanisiert sein kann. Solche Gummi-Metall-Gelenke sind an sich bekannt. Sie ermöglichen begrenzte Winkelbewegungen der angeschlossenen Lenker gegenüber den Gelenkzapfen.

Die vom treibenden Flansch (1) ausgehenden Lenker (9, 11) sind bei dem Ausführungsbeispiel aus je zwei deckungsgleichen Laschen gebildet. Am freien Ende schließen die Laschen den angelenkten Lenker (10 bzw. 12) ein. Die Gelenkverbindung wird durch einen Bolzen (13 bzw. 14) bewirkt.

Zur Abstützung der beiden Paare von Lenkern (9, 10 bzw. 11, 12) dient ein Zwischenglied (15) mit einer mittigen Bohrung (16), innerhalb der sich die Treibachse (3) oder gegebenenfalls auch das freie Ende der Hohlwelle (2) mit Spiel erstreckt. Das Zwischenglied (15) enthält an seinen entgegengesetzten Enden je eine achsparallelee Lagerbohrung zur Drehlagerung je eines Lagerbolzens (17 bzw. 18). An den freien Enden jedes Lagerbolzens (17 bzw. 18) ist je eine Hälfte der zweigeteilten Lenker (10 bzw. 12) unverdrehbar befestigt. Anders als die Lenker (9, 11) sind die Lenker (10, 12) nicht gradlinig, sondern stumpfwinklig abgeknickt ausgebildet. Außerdem verlaufen die jeweiligen Hälften der Lenker (10, 12) auf entgegengesetzten Seiten des Zwischengliedes (15).

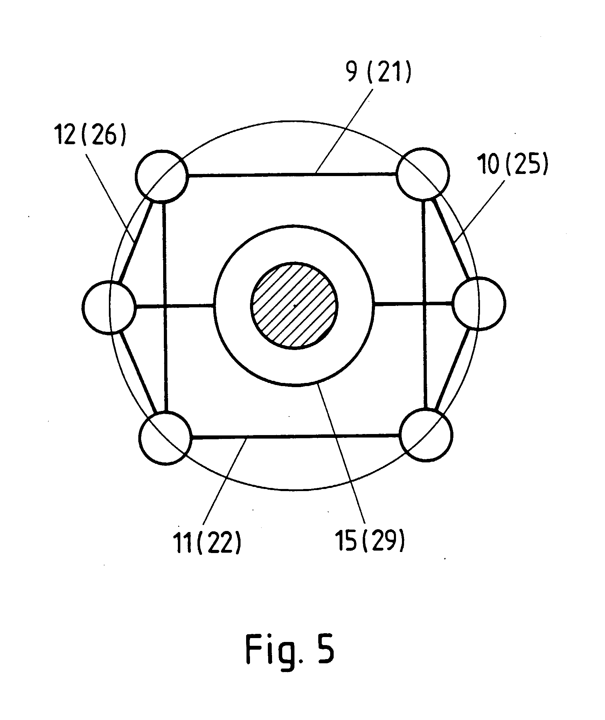

Zur Erzielung einer größtmöglichen Zentralsymmetrie stimmen bei allen Lenkern die Abstände zwischen ihren Gelenkpunkten überein. Dies bietet die Möglichkeit, die Lenker in der Ruhestellung der Gelenkkupplung so anzuordnen, daß die vier Gelenkpunkte mit ihren Projektionen auf einer gemeinsamen Kreislinie liegen, wie es in Fig. 5 dargestellt ist. Weiter ist für die Lenker (10, 12) jeweils eine solche Abwinklung der Hälften vorgesehen, daß auch die Mittelpunkte der Lagerzapfen (17, 18) mit der vorgenannten Kreislinie zusammenfallen. In der schematischen Darstellung in Fig. 5 wurden für die Lenker und das Zwischenglied die Bezugszahlen der Fig. 1 übernommen.

Auch für die Lagerung der Lagerzapfen (17, 18) am Zwischenglied (15) ist eine begrenzt winkelbewegliche Lagerung vorgesehen. Zu diesem Zweck ist jeweils ein an sich bekanntes sphärisch ausgebildetes Gummi-Metall-Gelenk (19) innerhalb der Lagerbohrung (20) des Flansches (15) angeordnet.

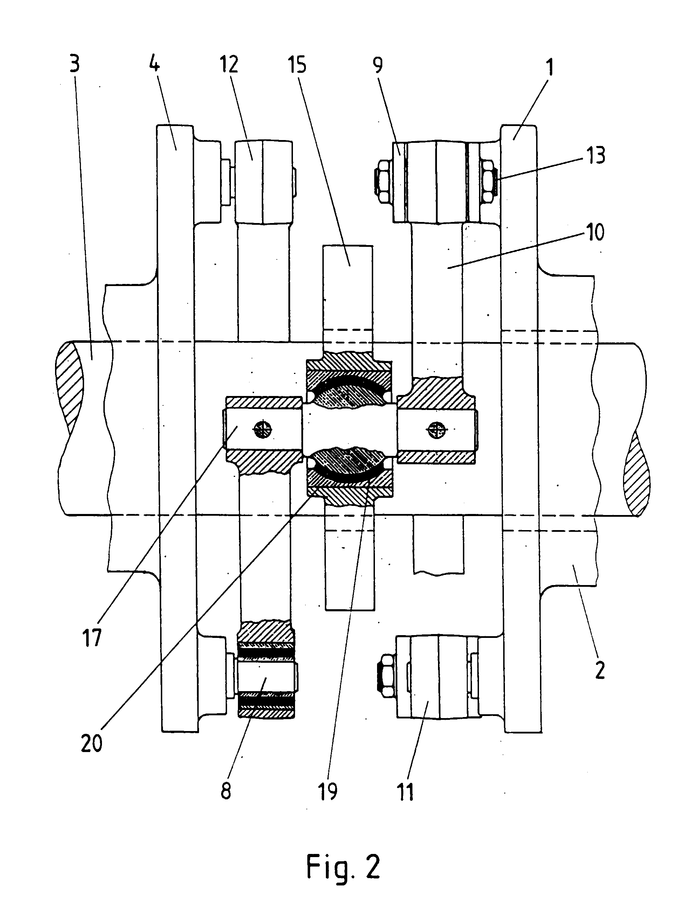

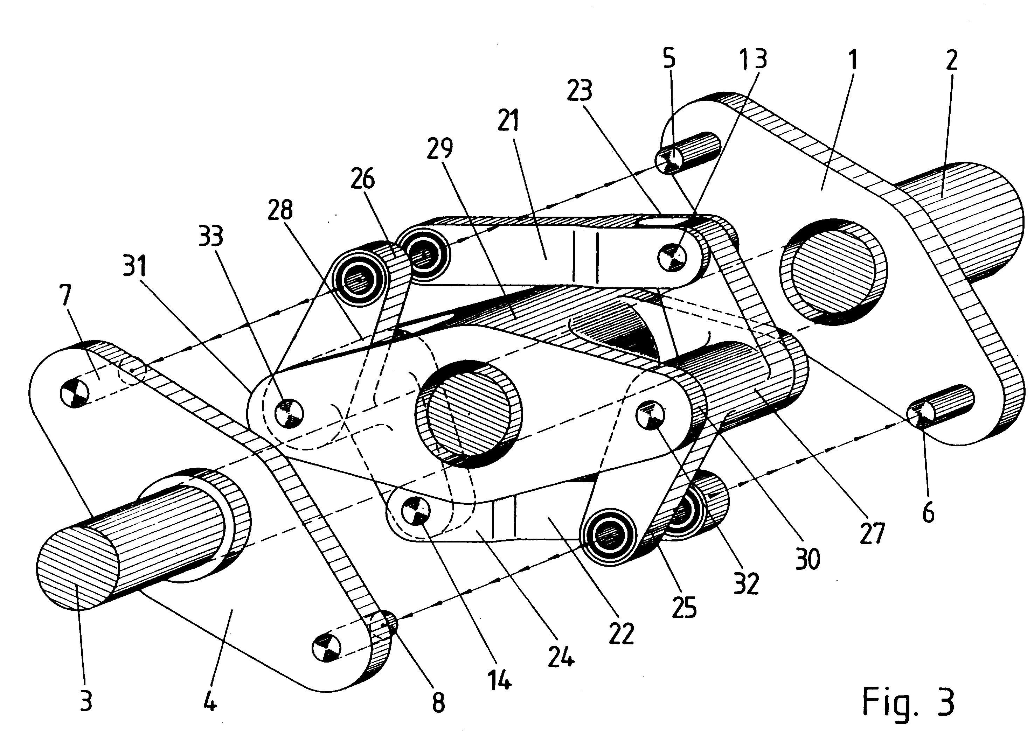

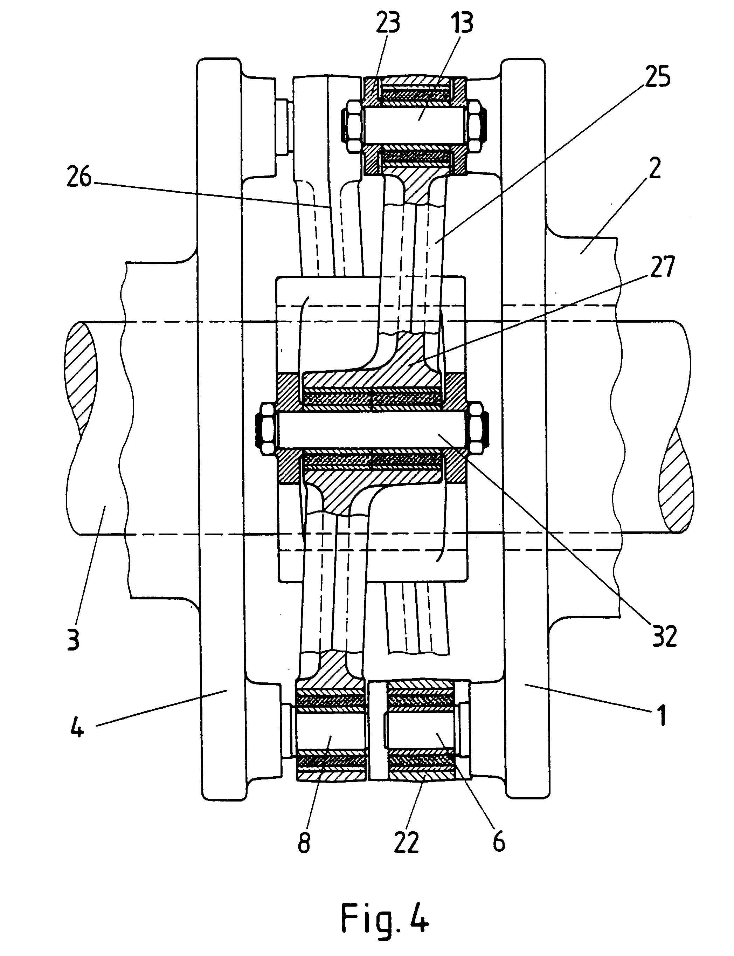

Die in den Figuren 3 und 4 dargestellte abgewandelte Ausführungsform stimmt in der Funktionsweise mit der vorstehend beschriebenen Ausführungsform der Gelenkkupplung überein. Es sind lediglich einzelne Bauteile konstruktiv anders gestaltet. Für übereinstimmende Bauteile wurden die Bezugszahlen der Figuren 1 und 2 beibehalten.

Zunächst sind die am antreibenden Flansch (1) angelenkten Lenker (21 bzw. 22) einteilig mit je einer am freien Ende angeformten Gabel (23 bzw. 24) ausgebildet. An den Gabelteilen ist mit Hilfe je eines Bolzens (13 bzw. 14) jeweils der weiterführende Lenker (25 bzw. 26) angelenkt. Jeder dieser Lenker (25 bzw. 26) ist als einteiliger Lenker mit einer in seiner Mitte angeformten Lagerbuchse (27 bzw. 28) ausgebildet. Die Halbarme der Lenker (25, 26) sind wie bei der ersten Ausführungsform stumpfwinklig zur Mitte hin abgeknickt. Weiterhin verlaufen die Halbarme in axialer Richtung in versetzten Ebenen, wie es aus den Figuren 3 und 4 ersichtlich ist.

Das Zwischenglied (29) ist bei dieser Ausführungsform mit zwei endseitigen Gabelteilen (30, 31) ausgebildet. In jedem Gabelteil ist die Lagerbuchse (27 bzw. 28) des Lenkers (25 bzw. 26) an einem Gabelzapfen (32 bzw. 33) drehbeweglich gelagert. Wie bei der ersten Ausführungsform sind auch hier alle Gelenke als Gummi-Metall-Gelenke ausgebildet.

Auch bei der zweiten Ausführungsform liegt eine quadratische Anordnung der vier Gelenkpunkte vor, wie es in Fig. 5 dargestellt ist. Weiterhin liegen die Gelenkpunkte der Gabelzapfen des Zwischengliedes (29) auf der gemeinsamen Kreislinie.

Die erfindungsgemäße Gelenkkupplung funktioniert in folgender Weise:
Aus Gründen der Vereinfachung wird für die folgende Beschreibung nur von der Ausführungsform der Figuren 1 und 2 ausgegangen.

Das Antriebsmoment wird vom Flansch (1) auf die führenden Lenker (9, 11) und die jeweils angelenkten Lenker (10, 12) auf den angetriebenen Flansch (4) und damit auf die Treibachse (3) übertragen. Das fliegend gelagerte Zwischenglied (15) spielt dabei die Rolle einer Stütze, indem es verhindert, daß die Lenker (9, 10 bzw. 11, 12) sich nähern oder auseinanderstreben. Das so gebildete Gelenkviereck mit den elastischen Gelenken an den einzelnen Gelenkpunkten erlaubt vertikale und horizontale Verlagerungen der Treibachse (3) gegenüber der im Fahrgestell gelagerten Hohlwelle (2). Die gewählte Anordnung der Einzelelemente gewährleistet gleiche und maximale Längen der Lenker für einen Kupplungsdurchmesser, der durch äußere Einbaubedingungen gegeben ist. Aufgrund dessen sind ihre Winkel und relativen Verlagerungen geringer als bei bekannten Bauarten. Eine Verkleinerung der relativen Verlagerungswinkel erhöht die Lebensdauer der Gelenke; die Verminderung des kinematischen Fehlers verkleinert die dynamischen Momente.

## Patentansprüche

1. Gelenkkupplung, insbesondere für Schienenfahrzeuge, zur Übertragung der Motorleistung von einer am Fahrzeug- oder Drehgestellrahmen gelagerten antreibenden Hohlwelle (2) auf eine von ihr umschlossene und begrenzt bewegliche Treibachse (3), mit einem starr mit der Hohlwelle (2) verbundenen ersten Flansch (1) und einem starr mit der Treibachse verbundenen zweiten Flansch (4), wobei die freien Enden eines Flansches über ein erstes und ein zweites Paar Lenkergelenke (9,10,11,12 ; 21,22,25,26) mit den freien Enden des anderen Flansches verbunden sind, wobei die beiden Paare von Lenkergelenken diametral angeordnet und an einem die Hohlwelle (2) fliegend umgebenden Zwischenglied (15,29) gelenkig abgestützt sind, dadurch gekennzeichnet, daß
a) die beiden Flansche (1, 4) fluchtend angeordnet sind,
b) alle Lenker (9, 10, 11, 12 bzw. 21, 22, 25, 26) die gleiche wirksame Länge haben,
c) die Lenker (9, 10 bzw. 11, 12 oder 21, 22 bzw. 25, 26) eines Paares an ihren inneren Enden drehgelenkig miteinander verbunden sind,
d) die Projektionen der Gelenkpunkte der beiden Paare von Lenkern (9, 10 bzw. 11, 12 oder 21, 22 bzw. 25, 26) in einer zur Treibachse (3) quer stehenden Ebene die Eckpunkte eines Quadrats bilden,
e) die Abstützung am Zwischenglied (15, 29) an zwei einander gegenüberstehenden Lenkern (10, 12 bzw. 25, 26) jeweils in ihrer Mitte vorgesehen ist und
f) die Halbarme der am Zwischenglied (15, 29) angelenkten Lenker (10, 12, bzw. 25, 26) auf axial entgegengesetzten Seiten bzw. der Längsmittenebene des Zwischengliedes (15, 29) verlaufen.

2. Gelenkkupplung nach Anspruch 1, dadurch gekennzeichnet, daß die am Zwischenglied (15, 29) angelenkten Lenker (10, 12 bzw. 25, 26) in Richtung zur Treibachse (3) derart stumpfwinklig abgeknickt ausgebildet sind, daß die beiden Gelenkachsen des Zwischengliedes (15, 29) auf einer Kreislinie liegen, die durch die Ecken des vorerwähnten Quadrates verläuft.

3. Gelenkkupplung nach Anspruch 1 oder 2, dadurch gekennzeichnet, daß an den Flanschen (1, 4) zur Treibachse (3) parallele Gelenkzapfen (5, 6, 7, 8) starr befestigt sind und daß die Lenker unter Verwendung von an sich bekannten Gummi-Metall-Gelenken an diesen gehalten sind.

4. Gelenkkupplung nach einem der Ansprüche 1 bis 3, dadurch gekennzeichnet, daß die am Zwischenglied (15) angelenkten Lenker (10, 12) aus je zwei Hälften bestehen und die Hälften durch einen Lagerbolzen (17, 18) starr miteinander verbunden sind, der gleichzeitig der gelenkigen Lagerung dient.

5. Gelenkkupplung nach Anspruch 4, dadurch gekennzeichnet, daß die Lagerbolzen (17, 18) je mit Hilfe eines sphärisch ausgebildeten Gummi-Metall-Gelenks (19) am Zwischenglied (15) gelagert sind.

6. Gelenkkupplung nach einem der Ansprüche 1 bis 3, dadurch gekennzeichnet, daß die am Zwischenglied (29) angelenkten Lenker (25, 26) je als einteilige Lenker mit einer angeformten Lagerbuchse (27, 28) ausgebildet sind und daß das Zwischenglied (29) an seinen Enden je eine Gabel (30, 31) zur Aufnahme je einer Lagerbuchse (27, 28) aufweist, die in der Gabel (30, 31) an einem Gabelzapfen (32, 33) gelagert ist.

7. Gelenkkupplung nach Anspruch 6, dadurch gekennzeichnet, daß die Lagerbuchsen (27, 28) je mit Hilfe eines Gummi-Metall-Gelenks am Gabelzapfen (32, 33) gelagert sind.

## Claims

1. Articulated coupling, in particular for rail vehicles, for transmitting the motor power from a hollow driving shaft (2) supported at the chassis of the vehicle or bogie, to a drive axle (3) enclosed by and limited in its movement by said hollow shaft, with a first flange (1) rigidly attached to the hollow shaft (2) and a second flange (4) rigidly attached to the drive axle, the free ends of one flange being connected to the free ends of the other flange via a first and a second pair of drive links (9, 10, 11, 12; 21, 22, 25, 26), both pairs of drive links being diametrically arranged and supported in an articulated manner at an intermediate link (15, 29) which encircles the hollow shaft (2) in an overhung manner, **characterised in that**
a) the two flanges (1, 4) are in alignment,
b) all links (9, 10, 11, 12 and 21, 22, 25, 26, respectively) have the same effective length,
c) the links (9, 10 or 11, 12, or 21, 22 or 25, 26, respectively) of a pair are interconnected at their ends in a hinged manner,
d) the projections of the hinge points of the two pairs of links (9, 10 or 11, 12, or 21, 22 or 25, 26, respectively) form the corner points of a square located in a plane at right angles to the drive axle (3),
e) the support at the intermediate link (15, 29) is provided at the centre of each of two opposing links (10, 12, or 25, 26, respectively), and
f) the half-arms of the links (10, 12, or 25, 26, respectively) hinged at the intermediate link (15, 29) run on axially-opposed sides or on the longitudinal, central plane of the intermediate link (15, 29).

2. Articulated coupling according to Claim 1, characterised in that the links (10, 12, or 25, 26, respectively) hinged to the intermediate link (15, 29) are offset at an obtuse angle in the direction of the drive axle (3) in such a way that the two hinged pivots of the intermediate link (15, 29) lie on a circle which passes through the corners of the afore-mentioned square.

3. Articulated coupling according to Claim 1 or 2, characterised in that pivot pins (5, 6, 7, 8) are rigidly attached to the flanges (1, 4) parallel to the drive axle (3), and that the links are fixed to these pivot pins by means of known rubber-metal joints.

4. Articulated coupling according to one of Claims 1 to 3, characterised in that the links (10, 12) hinged to the intermediate link (15) each comprise two halves and the halves are rigidly connected together by a bearing pin (17, 18) which serves at the same time as the hinged bearing.

5. Articulated coupling according to Claim 4, characterised in that each of the bearing pins (17, 18) is supported at the intermediate link (15) by means of a rubber-metal joint (19) of spherical construction.

6. Articulated coupling according to one of Claims 1 to 3, characterised in that the links (25, 26) hinged at the intermediate link (29) are each constructed as one-piece links with an integral bearing bush (27, 28), and that the intermediate link (29) has a fork (30, 31) at each end to accommodate a bearing bush (27, 28) which is supported in the fork (30, 31) on a gudgeon (32, 33).

7. Articulated coupling according to Claim 6, characterised in that each of the bearing bushes (27, 28) is supported at the gudgeon (32, 33) by means of a rubber-metal joint.

## Revendications

1. Accouplement articulé, notamment pour véhicules ferroviaires, destiné à transmettre la puissance motrice d'un arbre creux menant (2), monté sur le châssis du véhicule ou du bogie, à un essieu moteur (3) entouré par ledit arbre et doué de mobilité limitée, comprenant une première bride (1) reliée rigidement à l'arbre creux (2) et une seconde bride (4) reliée rigidement à l'essieu moteur, les extrémités libres d'une bride étant reliées aux extrémités libres de l'autre bride par l'intermédiaire de première et seconde paires d'articulations à biellettes (9, 10, 11, 12 ; 21, 22, 25, 26), les deux paires d'articulations à biellettes étant agencées diamétralement et étant en appui articulé sur une pièce intermédiaire (15, 29) qui ceinture l'arbre creux (2) de manière flottante, caractérisé par le fait que
a) les deux brides (1, 4) sont disposées avec alignement,
b) toutes les biellettes (9, 10, 11, 12, respectivement 21, 22, 25, 26) présentent la même longueur efficace,
c) les biellettes (9, 10, respectivement 11, 12 ou 21, 22, respectivement 25, 26) d'une paire sont solidarisées, avec articulation tournante, par leurs extrémités intérieures,
d) les projections des points d'articulation des deux paires de biellettes (9, 10, respectivement 11, 12 ou 21, 22, respectivement 25, 26) forment les coins d'un rectangle dans un plan perpendiculaire à l'essieu moteur (3),
e) l'appui sur la pièce intermédiaire (15, 29) est prévu sur deux biellettes mutuellement opposées (10, 12, respectivement 25, 26), respectivement en leur centre, et
f) les demi-bras des biellettes (10, 12, respectivement 25, 26) articulées sur la pièce intermédiaire (15, 29) s'étendent, respectivement, sur des côtés axialement opposés ou dans le plan médian longitudinal de la pièce intermédiaire (15, 29).

2. Accouplement articulé selon la revendication 1, caractérisé par le fait que les biellettes (10, 12, respectivement 25, 26) articulées sur la pièce intermédiaire (15, 29) sont de réalisation coudée à angle obtus, en direction de l'essieu moteur (3), de telle sorte que les deux axes d'articulation de la pièce intermédiaire (15, 29) se trouvent sur une ligne circulaire passant par les coins du rectangle précité.

3. Accouplement articulé selon la revendication 1 ou 2, caractérisé par le fait que des tourillons d'articulation (5, 6, 7, 8), parallèles à l'essieu moteur (3), sont fixés rigidement aux brides (1, 4) ; et par le fait que les biellettes sont retenues sur lesdits tourillons grâce à l'utilisation d'articulations du type caoutchouc-métal, connues par elles-mêmes.

4. Accouplement articulé selon l'une des revendications 1 à 3, caractérisé par le fait que les biellettes (10, 12) articulées sur la pièce intermédiaire (15) se composent chacune de deux moitiés, et les moitiés sont assujetties l'une à l'autre par un tenon de portée (17, 18) servant, simultanément, au montage articulé.

5. Accouplement articulé selon la revendication 4, caractérisé par le fait que les tenons de portée (17, 18) sont respectivement montés sur la pièce intermédiaire (15) à l'aide d'une articulation (19) du type caoutchouc-métal, de réalisation sphérique.

6. Accouplement articulé selon l'une des revendications 1 à 3, caractérisé par le fait que les biellettes (25, 26) articulées sur la pièce intermédiaire (29) sont respectivement réalisées sous la forme de biellettes monobloc, munies d'une douille de portée (27, 28) ménagée solidairement ; et par le fait que la pièce intermédiaire (29) présente, à ses extrémités, une fourche respective (30, 31) destinée à recevoir une douille de portée (27, 28) considérée qui est montée, dans la fourche (30, 31), sur un tenon (32, 33) de ladite fourche.

7. Accouplement articulé selon la revendication 6, caractérisé par le fait que les douilles de portée (27, 28) sont montées, sur le tenon (32, 33) de la fourche, à l'aide d'une articulation respective du type caoutchouc-métal.
